# EUROPÄISCHE PATENTSCHRIFT

(11) **EP 2 691 943 B1**
(45) Veröffentlichungstag und Bekanntmachung des Hinweises auf die Patenterteilung: **13.03.2019**
(21) Anmeldenummer: 12717159.3
(22) Anmeldetag: 26.03.2012
(51) Int. Cl.: G07F 7/06, B07C 5/02, B07C 5/12, B07C 5/342, B65G 47/14

(54) **VERFAHREN UND TRANSPORTEINRICHTUNG ZUR RÜCKNAHME VON LEERGUT, INSBESONDERE VON FLASCHEN UND DOSEN**
METHOD AND TRANSPORT DEVICE FOR RETURNING EMPTY PACKAGING, PARTICULARLY BOTTLES AND CANS
PROCÉDÉ ET DISPOSITIF DE TRANSPORT POUR LA REPRISE D'EMBALLAGES VIDES, EN PARTICULIER DE BOUTEILLES ET DE BOÎTES

(30) Priorität: 26.03.2011 DE 102011015239
(43) Veröffentlichungstag der Anmeldung: 05.02.2014
(73) Patentinhaber: Envipco Holding N.V., 3818 EP Amersfoort (NL)
(72) Erfinder: BEYER, Dieter, 98701 Friedersdorf (DE)
(74) Vertreter: Bremer, Ulrich
(86) Internationale Anmeldenummer: PCT/DE2012/000312
(87) Internationale Veröffentlichungsnummer: WO 2012/130219

(56) Entgegenhaltungen:
- EP-A1- 2 105 891
- WO-A1-2010/046085
- DE-A1- 2 254 791
- DE-A1-102004 010 133
- US-A- 4 472 819

## Beschreibung

Die vorliegende Erfindung betrifft ein Verfahren und eine Transporteinrichtung zur Rücknahme von Leergut, insbesondere von Flaschen und Dosen, gemäß dem Oberbegriff von Anspruch 1 bzw. Anspruch 2.

Derartige Verfahren und Transporteinrichtungen kommen in Leergut-Rücknahmeautomaten zum Einsatz. Mit Hilfe dieser Automaten werden Einweg- und Mehrweg-Container in Form von Flaschen und Dosen zurückgenommen. Es wird dabei zwischen Einzel-Einzugsystemen und Bulk-Einzugsystemen unterschieden.

Ein Beispiel für einen Leergut-Rücknahmeautomaten mit Einzel-Einzugsystem ist in der WO 02/12095 A1 zu finden. Bei derartigen Automaten werden die Container seriell nacheinander von Hand eingegeben und dann durch eine Transporteinrichtung seriell, d,h, in einer Reihe, einzeln nacheinander, an einer Erkennungseinheit vorbeigeführt, durch die die Container auf Form, Beschaffenheit, Unversehrtheit sowie Barcodes oder Sonderzeichen überprüft werden.

Leergut-Rücknahmeautomaten mit Bulk-Einzugsystem sind in der DE 10 2005 025 965 A1, der DE 10 2004 010 133 A1 und der DE 103 35 188 A1 beschrieben. Bei diesen Automaten wird zurück zu gebendes Leergut nicht einzeln, d. h. Stück für Stück, eingeben, sondern in einer Masse (Bulk), d. h., so zu sagen als Schüttgut. Die Eingabe erfolgt in einen Eingaberaum, aus dem das Leergut durch die Transporteinrichtung heraus transportiert wird. Bei den meisten aus dem Stand der Technik bekannten Automaten erfolgt aus dem Eingaberaum heraus eine serielle Vereinzelung des Leerguts, welches in dieser Anordnung dann wie beim Einzel-Einzugsystem von der Transporteinrichtung an einer Erkennungseinheit herbeigeführt wird, durch die das Leergut der Reihe nach einzeln erfasst wird.

Die oben kurz beschriebenen Bulk-Einzugsysteme haben den Vorteil, dass die Eingabe des Leerguts in den Automaten für einen Benutzer schnell und unproblematisch erfolgt. Nachteilig ist jedoch, dass der Durchsatz durch den Automaten aufgrund der seriellen Vereinzelung trotz teilweise hoher Einzeltransportgeschwindigkeiten des Leerguts zu viel Zeit in Anspruch nimmt, so dass ein Kunde relativ lange auf den Ausdruck eines Pfand-Bons warten muss.

Dieser Nachteil wird durch eine aus der DE 10 2008 052 330 A1 bekannt gewordene Lösung beseitigt. Diese betrifft ein Verfahren und eine entsprechende Vorrichtung zur Rücknahme von Leergut, insbesondere von Flaschen und Dosen, mit einer Bulk-Eingabe, bei der das Leergut aus einem Eingaberaum heraus durch eine Transporteinrichtung sich um seine Längsachse drehend an einer Erkennungseinheit vorbei geführt wird. Das Leergut wird durch die Transporteinrichtung aus dem Eingaberaum heraus parallelisiert und einem Detektionsfeld der Erkennungseinheit in einer Feldanordnung zugeführt. Feldanordnung soll bedeuten, dass das Leergut auf der Transporteinrichtung in Förderrichtung gesehen nicht nur der Reihe nach übereinander bzw. hintereinander sondern gleichzeitig auch nebeneinander angeordnet ist. Die Transporteinrichtung weist mehrere quer zur Transportrichtung angeordnete, voneinander beabstandete Mitnehmer auf, die um eine Anlagefläche der Transporteinrichtung umlaufen und als in Gegenuhrzeigersinn drehangetriebene Rollen ausgebildet sind, auf denen aus dem Eingaberaum gefördertes Leergut aufliegt, das sich gleichzeitig an der Anlagefläche abstützt. Aufgrund dieser Maßnahmen wird der Durchsatz des Leergutes durch einen Rücknahmeautomaten wesentlich erhöht.

Es hat sich beim Betrieb eines nach dem oben beschrieben Verfahren arbeitenden Rücknahmeautomaten gezeigt, dass es bei der Parallelisierung des Leergutes aus dem Eingaberaum heraus ab und zu dazu kommt, dass das Leergut auf einer Rolle nicht nur nebeneinander sondern auch übereinander liegt, wodurch eine ordnungsgemäße Überprüfung des Leerguts nicht möglich ist.

Aufgabe der vorliegenden Erfindung ist es daher, ein Verfahren und eine Transporteinrichtung zur Rücknahme von Leergut, insbesondere von Flaschen und Dosen, zur Verfügung zu stellen, mit dem bzw. der Übereinanderbelegungen der als Mitnehmer fungierenden Rollen durch Leergut auf einfache Weise beseitigt werden können.

Diese Aufgabe wird erfindungsgemäß mit einem Verfahren und einer Transporteinrichtung gemäß den Ansprüchen 1 und 2 gelöst.

Erfindungsgemäß erfolgt also für mindestens eine Rolle, die sich auf ihrem Umlauf um die Anlagefläche gerade in einem Bereich zwischen dem Eingaberaum und dem Detektionsfeld befindet, eine kurzzeitige Drehrichtungsumkehr, und zwar vom Gegenuhrzeigersinn in den Uhrzeigersinn. Es hat sich überraschender Weise gezeigt, dass durch diese einfache Maßnahme eine zuverlässige Lagebereinigung des Leerguts auf den Rollen erreicht wird, d. h., bei auf einer Rolle übereinander liegendem Leergut, fällt oben aufliegendes Leergut in den Eingaberaum zurück. Dem Detektionsfeld wird das Leergut dadurch ordnungsgemäß nur nebeneinander auf einer Rolle liegend zugeführt.

Vorrichtungstechnisch wird die Drehrichtungsumkehr dadurch erreicht, dass die Rollen beidseitig an um die Anlagefläche umlaufenden Kettentrieben drehbar gelagert sind und beidseitig über einen Mitnahmebereich überstehen und in den dadurch gebildeten Überstandsbereichen zum Drehantrieb unter Reibschluss oder Formschluss an Schienen anliegen, die, bezogen auf die Kettentriebe, auf der Seite der Anlagefläche angeordnet sind, wobei die Schienen in dem Bereich zwischen dem Eingaberaum und dem Detektionsfeld, in dem eine Drehrichtungsumkehr der mindestens einen Rolle erfolgen soll, unterbrochen sind und in diesem Bereich oberhalb der Rollen weitere Schienen angeordnet sind, an denen die Rollen zum Drehantrieb unter Reibschluss oder Formschluss anliegen.

In vorteilhafter Ausgestaltung der Transporteinrichtung weisen die Rollen in den Überstandsbereichen jeweils einen Abschnitt auf, dessen Durchmesser kleiner ist als der Durchmesser der Rollen auf dem das Leergut aufliegt, wobei die Rollen im Bereich des Detektionsfeldes mit diesen Abschnitten zum Drehantrieb unter Reibschluss oder Formschluss an Schienen anliegen, die, bezogen auf die Kettentriebe, auf der Seite der Anlagefläche angeordnet sind. Durch diese Maßnahme erhöht sich im Bereich des Detektionsfeldes die Umfangsgeschwindigkeit des Leergutes, woraus sich in vorteilhafter Weise eine Verkürzung der Höhe des Detektionsfeldes ergibt.

Es hat sich als vorteilhaft herausgestellt, wenn die Rollen im Mitnahmebereich sich abwechselnde Abschnitte größeren und kleineren Durchmessers aufweisen, wobei das Leergut auf Abschnitten größeren Durchmessers aufliegt. Die Mitnahme des Leerguts ist dann störungsfreier, insbesondere kann sich das Leergut bei dieser Gestaltung der Rollen nicht zwischen diesen und der Anlagefläche verkeilen.

In weiterer Ausgestaltung der Erfindung ist die Transporteinrichtung als Steilförderer, insbesondere mit einem Anstellwinkel α von 60° bis 85°, ausgeführt. Dadurch wird zum Einen die Bautiefe eines Rücknahmeautomaten reduziert. Zum Anderen hat sich gezeigt, dass in dem angegebenen Anstellwinkelbereich die Lagebereinigung von Leergut auf den Rollen durch Richtungsumkehr der Drehrichtung der Rollen besonders effektiv ist.

Die Erfindung wird nachstehend anhand eines Ausführungsbeispieles näher erläutert. In der dazugehörigen Zeichnung zeigt in schematischer Weise:
- Fig. 1: eine Vorderansicht einer erfindungsgemäßen Transporteinrichtung,
- Fig. 2: eine Seitenansicht gemäß Fig. 1,
- Fig. 3: eine perspektivische Ansicht der Transporteinrichtung mit eingezeichnetem Detektionsfeld einer zu einer Erkennungseinheit gehörenden Kamera,
- Fig. 4: eine ausschnittsweise Seitenansicht der Transporteinrichtung in vergrößerter Darstellung, und
- Fig. 5: eine Draufsicht auf die Darstellung gemäß Fig. 4.

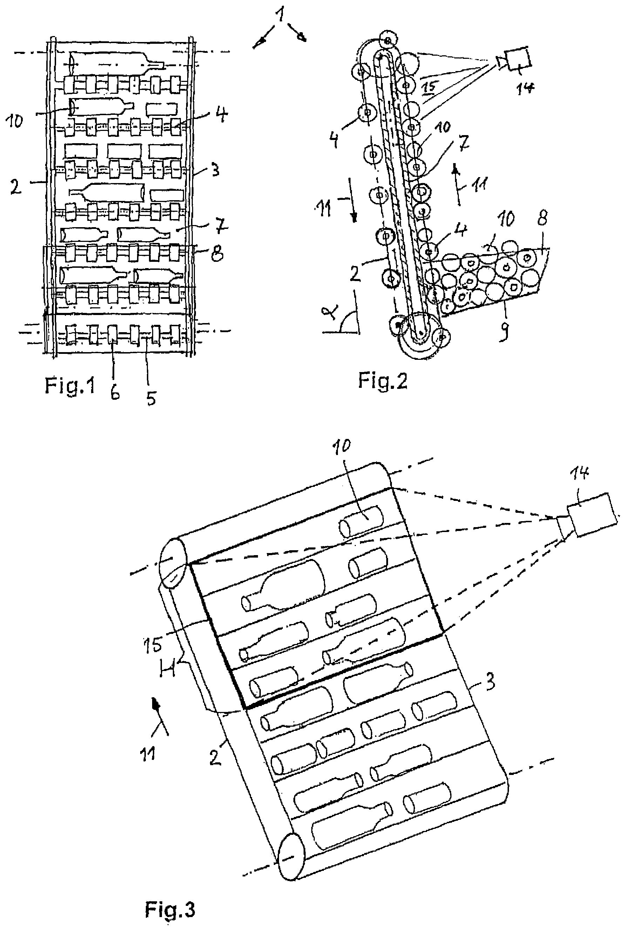

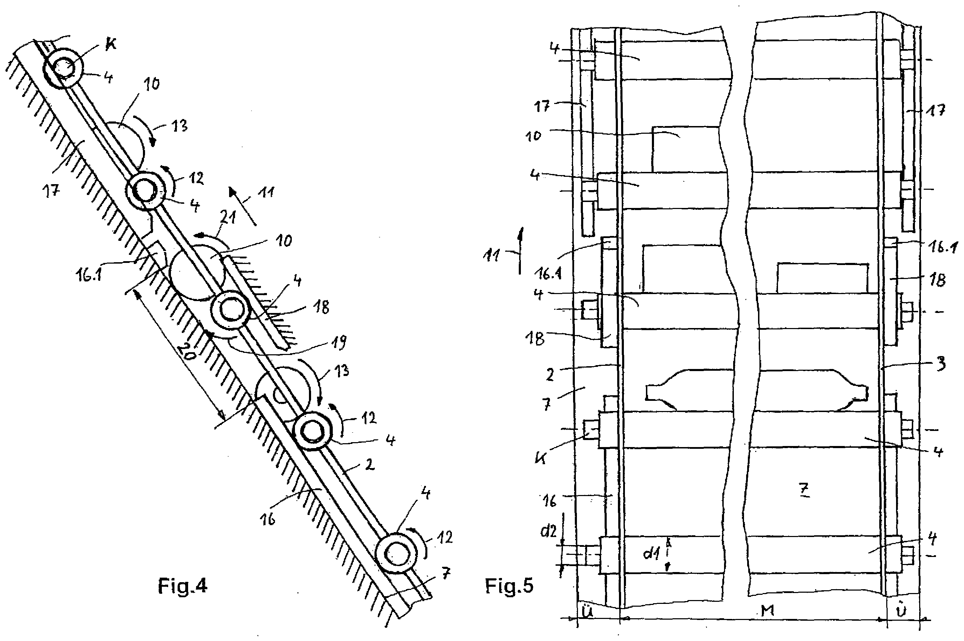

Einleitend sei bemerkt, dass in den Figuren 1-3 die aus den Figuren 4 und 5 ersichtlichen Mittel zum Drehantrieb von als Mitnehmer fungierenden Rollen 4 aus Gründen der Übersichtlichkeit weggelassen worden sind.

Die Zeichnung zeigt einen Steilförderer 1 eines ansonsten nicht weiter dargestellten Leergut-Rücknahmeautomaten. Der Anstellwinkel α des Steilförderers 1 liegt bei diesem Ausführungsbeispiel in einem Bereich von 60° bis 85°. Er weist auf seinen beiden Längsseiten umlaufende Kettentriebe 2, 3 auf, an denen die quer zur Förderrichtung angeordneten Rollen 4 drehbar gelagert sind. Die Rollen 4 sind in gleichmäßigen Abständen auf den Umfang verteilt drehbar an den Kettentrieben 2 und 3 gelagert und weisen sich abwechselnde Abschnitte 5, 6 kleineren und größeren Durchmessers auf (siehe Figur 1; in Figur 5 ist eine derartige Unterteilung der Rollen 4 nicht dargestellt).

Am unteren Ende des Steilförderers 1 ist ein nach oben offener, trichterförmiger Eingaberaum 8 angeordnet. Der Boden 9 des Eingaberaums 8 verläuft zum Steilförderer 1 hin nach unten geneigt. In den Eingaberaum 8 wird Leergut 10 in Form von Dosen und Flaschen durch Ausschütten, z. B. aus einer Tasche, gewissermaßen als Schüttgut, eingegeben. Aufgrund der Neigung des Bodens 9 ist eine Triebkraft vorhanden, die das Leergut 10 zum Steilförderer 1 hin rollen bzw. rutschen lässt. Die Rollen 4 des Steilförderers 1 durchlaufen den Eingaberaum 8, wodurch Leergut 10, auf den Abschnitten 6 größeren Durchmessers der Rollen 4 aufliegend, mitgenommen wird. Die Rollen 4 sind so breit, dass mindestens zwei Stücke Leergut 10 nebeneinander auf einer Rolle 4 zum Liegen kommen können.

Der Steilförderer 1 fördert das Leergut 10 aus dem Eingaberaum 8 heraus nach oben. Am oberen Ende des Steilförderers 1 wird das Leergut 10 dann an nicht dargestellte, nachfolgende Einrichtungen des Rücknahmeautomaten übergeben. Die Förderrichtung ist in der Zeichnung durch Pfeile 11 dargestellt. Dabei laufen die Rollen 4 zumindest am Obertrum der Kettentriebe 2 und 3 über eine starre ortsfeste Anlagefläche 7 für das geförderte Leergut 10. Die Rollen 4 stehen beidseitig über einen Mitnahmebereich M, der durch den gegenseitigen Abstand der Kettentriebe 2 und 3 voneinander gegeben ist, über und werden in den dadurch gebildeten Überstandsbereichen Ü durch Reibschluss drehangetrieben (Fig. 5).

Die Rollen 4 laufen zunächst aus dem Eingaberaum 8 heraus mit ihrem Durchmesser d1, auf dem das Leergut 10 im Mitnahmebereich M aufliegt, auf ortsfest an der Auflagefläche 7 montierten Schienen 16. Sie erhalten dadurch einen Drehantrieb im Gegenuhrzeigersinn, wie in Figur 4 durch einen Pfeil 12 dargestellt ist. Das auf den Rollen 4 lagernde Leergut 10 wird dadurch im Uhrzeigersinn angetrieben, wie in Figur 4 durch einen Pfeil 13 angedeutet ist. Aufgrund dieser Drehrichtung 13 wird das Leergut 10 an die Anlagefläche 7 gedrückt, so dass es nicht von den Rollen 4 herunterfallen kann.

Der Steilförderer 1 führt das derart rotierende Leergut 10 an einer zu einer Erkennungseinheit gehörenden Kamera 14 vorbei, wie in Figur 3, in der der Eingaberaum 8 und die Rollen 4 weggelassen wurden, und in Figur 2 dargestellt ist. Die Kamera 14 hat ein flächenhaftes Detektionsfeld 15. Dieses Detektionsfeld 15 umfasst die ganze Breite des Steilförderers 1, und die Höhe H des Detektionsfeldes 15 ist so gewählt, dass sie mindestens der abgerollten Mantelfläche des Leerguts 10 mit dem größten Durchmesser entspricht. Dadurch wird erreicht, dass alle auf der Mantelfläche eines Stück Leerguts 10 befindlichen Kennzeichen, Barcodes oder sonstige bildliche Merkmale sicher erfasst werden können. Die Kamera 14 ist mit entsprechender Funktionsbeleuchtung unter einem bestimmten Winkel und in einem definierten Abstand über dem Steilförderer 1 angeordnet und kann somit während des Aufwärtstransports des rotierenden Leerguts 10 alle auf dessen Umfang vorhandenen Zeichen etc. optoelektronisch in Echtzeit erfassen. Zusätzlich kann durch eine Kameraeinheit die Gesamtanordnung überwacht werden und deren Aufnahmen für gezielte Servicemaßnahmen genutzt werden.

Die Rollen 4 weisen in ihren Überstandsbereichen Ü jeweils einen Abschnitt K auf, der einen kleineren Durchmesser d2 hat als die Rollen 4 im Mitnahmebereich M. Mit diesen Abschnitten K laufen die Rollen 4 unter Reibschluss auf ortsfest an der Auflagefläche 7 montierten Schienen 17 ab, die aufgrund des kleineren Durchmessers der Abschnitte K entsprechend höher sind als die Schienen 16 . Die Rollen 4 haben hier also die gleiche Drehrichtung wie im Bereich der Schienen 16, aber auf Grund der "Übersetzung" eine höhere Umfangsgeschwindigkeit. Im Resultat verkürzt sich die Höhe H des erforderlichen Detektionsfeldes 15. Wenn eine Erhöhung der Umfangsgeschwindigkeit nicht erforderlich ist, können die Abschnitte K der Überstandsbereiche Ü wegfallen. Es liegen dann die gleichen Verhältnisse wie im Bereich der Schienen 16 vor, d. h., die Schienen 17 werden durch Schienen von der Art der Schienen 16 ersetzt.

Bei der Förderung des Leergutes 10 aus dem Eingaberaum 8 kann es passieren, dass Leergut 10 auf einer Rolle 4 nicht nur nebeneinander sondern auch übereinander zu liegen kommt. In diesem Fall wäre eine ordnungsgemäße Erfassung von Kennzeichen etc. auf dem Mantel des Leerguts 10 nicht möglich. Um derartige Belegungen der Rollen 4 gegebenenfalls zu beseitigen, erfolgt für eine Rolle 4, die sich auf ihrem Umlauf um die Anlagefläche 7 gerade in einem Bereich zwischen dem Eingaberaum 8 und dem Detektionsfeld 15 befindet, kurzzeitig eine Drehrichtungsumkehr. Das geschieht dadurch, dass zwischen den Schienen 16 und 17 ein Abstand 20, bzw, wenn die Schienen 16 auch im Bereich des Detektionsfeldes 15 zur Anwendung kommen, wie oben dargelegt, in den Schienen 16 eine Unterbrechung vorgesehen ist. Im Bereich dieses Abstandes 20 bzw. dieser Unterbrechung ist oberhalb der Rollen 4 eine weitere Schiene 18 ortsfest angeordnet, auf der die Rollen 4 unter Reibschluss mit ihrem Durchmesser d1 abrollen. Die Rollen 4 drehen sich dadurch im Uhrzeigersinn, wie in Figur 4 durch einen Pfeil 19 angedeutet. Dadurch kehrt sich auch die Drehrichtung des Leerguts 10 um, welches nun im Gegenuhrzeigersinn rotiert, wie in Figur 4 durch einen Pfeil 21 symbolisch dargestellt ist. Aufgrund dieser Drehrichtungsumkehr fällt bei einer Übereinanderbelegung von Rollen 4 durch Leergut 10 oben aufliegendes Leergut 10 in den Eingaberaum 8 zurück und wird von dort erneut gefördert.

Bevor die Rollen 4 auf die Schienen 17 aufrollen, ist in dem Abstand 20 zu den Schienen 16 vor dem Beginn der Schienen 17 ein kurzes Fortsetzungsstück 16.1 der Schienen 16 angeordnet. Dies bewirkt eine Rückkehr in die Drehrichtung 13 des Leerguts 10, bevor die Umfangsgeschwindigkeit in dieser Drehrichtung 13 bei Kontakt der Rollen 4 mit den Schienen 17 erhöht wird.

## Patentansprüche

1. Verfahren zur Rücknahme von Leergut, insbesondere von Flaschen und Dosen, mit einer Bulk-Eingabe, bei der das Leergut (10) aus einem Eingaberaum (8) heraus durch eine Transporteinrichtung (1) sich um seine Längsachse drehend an einer Erkennungseinheit (14) vorbeigeführt wird, und das Leergut (10) durch die Transporteinrichtung (1) aus dem Eingaberaum (8) heraus parallelisiert und einem Detektionsfeld (15) der Erkennungseinheit (14) in einer Feldanordnung zugeführt wird, wobei die Transporteinrichtung (1) mehrere quer zur Transportrichtung angeordnete, voneinander beabstandete Mitnehmer aufweist, die um eine Anlagefläche (7) der Transporteinrichtung (1) umlaufen und als in Gegenuhrzeigersinn drehangetriebene Rollen (4) ausgebildet sind, auf denen aus dem Eingaberaum (8) gefördertes Leergut (10) aufliegt, das sich gleichzeitig an der Anlagefläche (7) abstützt, **dadurch gekennzeichnet, dass** für mindestens eine Rolle (4), die sich auf ihrem Umlauf um die Anlagefläche (7) gerade in einem Bereich zwischen dem Eingaberaum (8) und dem Detektionsfeld (15) befindet, eine kurzzeitige Drehrichtungsumkehr erfolgt.

2. Transporteinrichtung zur Durchführung des Verfahrens nach Anspruch 1, **dadurch gekennzeichnet, dass** die Rollen (4) beidseitig an um die Anlagefläche (7) umlaufenden Kettentrieben (2, 3) drehbar gelagert sind und beidseitig über einen Mitnahmebereich (M) überstehen und in den dadurch gebildeten Überstandsbereichen (Ü) zum Drehantrieb unter Reibschluss oder Formschluss an Schienen (16, 17) anliegen, die, bezogen auf die Kettentriebe (2, 3), auf der Seite der Anlagefläche (7) angeordnet sind, wobei die Schienen (16, 17) in dem Bereich zwischen dem Eingaberaum (8) und dem Detektionsfeld (15), in dem eine Drehrichtungsumkehr der mindestens einen Rolle (4) erfolgen soll, unterbrochen sind und in diesem Bereich oberhalb der Rollen (4) weitere Schienen (18) angeordnet sind, an denen die Rollen (4) zum Drehantrieb unter Reibschluss oder Formschluss anliegen.

3. Transporteinrichtung nach Anspruch 2, **dadurch gekennzeichnet, dass** die Rollen (4) in den Überstandsbereichen (Ü) einen Abschnitt (K) aufweisen, dessen Durchmesser (d2) kleiner ist als der Durchmesser (d1) der Rollen (4) in dem Mitnahmebereich (M), wobei die Rollen (4) im Bereich des Detektionsfeldes (15) mit den Abschnitten (K) zum Drehantrieb unter Reibschluss oder Formschluss an Schienen (17) anliegen, die, bezogen auf die Kettentriebe (2, 3), auf der Seite der Anlagefläche (7) angeordnet sind.

4. Transporteinrichtung nach Anspruch 3, **dadurch gekennzeichnet, dass** die Rollen (4) im Mitnahmebereich (M) aus sich abwechselnden Abschnitten (5, 6) kleineren und größeren Durchmessers bestehen, wobei das Leergut (10) auf den Abschnitten (6) größeren Durchmessers (d1) aufliegt.

5. Transporteinrichtung nach einem der vorstehenden Ansprüche, **dadurch gekennzeichnet, dass** sie als Steilförderer (1), insbesondere mit einem Anstellwinkel α von 60° bis 85°, ausgeführt ist.

## Claims

1. Method for returning empty containers, in particular bottles and cans, with a bulk feed, wherein the empty containers (10) are transported out of an input space (8) by means of a transport device (1) rotating around their longitudinal axis past a detection unit (14), and the empty containers (10) are parallelised by the transport device (1) out of the input space (8) and fed to a detection field (15) of the detection unit (14) in a field arrangement, wherein the transport device (1) exhibits a plurality of drivers arranged transversely to the transport direction, which rotate around a contact surface (7) of the transport device (1) and are designed as counter-clockwise rotationally driven rollers (4), on which the empty containers (10) conveyed from the input space (8) are supported, which are supported at the same time by the contact surface (7), **characterised in that** for at least one roller (4), which in its rotation around the contact surface (7) is located directly in a region between the input space (8) and the detection field (15), a temporary reversal of rotation occurs.

2. Transport device for implementing the method according to Claim 1, **characterised in that** the rollers (4) are rotatably mounted on both sides on chain drives (2, 3) revolving around the contact surface (7) and protrude on both sides over a transfer area (M) and in the protrusion areas (Ü) formed thereby for rotary drive by frictional engagement or positive engagement abut rails (16, 17), which are arranged on the side of the contact surface (7) in relation to the chain drive (2, 3), wherein the rails (16, 17) are discontinued in the region between the input space (8) and the detection field (15), in which a reversal of rotation of the at least one roller (4) is to take place, and in this area above the rollers (4) further rails (18) are arranged, which are abutted by the rollers (4) for rotary drive by frictional engagement or positive engagement.

3. Transport device according to Claim 2, **characterised in that** the rollers (4) exhibit a section (K) in the protrusion areas (Ü), whose diameter (d2) is smaller than the diameter (d1) of the rollers (4) in the transfer area (M), wherein the rollers (4) in the region of the detection field (15) with the sections (K) for rotary drive by frictional engagement or positive engagement abut rails (17), which are arranged on the side of the contact surface (7) in relation to the chain drives (2, 3).

4. Transport device according to Claim 3, **characterised in that** the rollers (4) in the transfer area (M) comprise alternating sections (5, 6) of smaller and larger diameter, wherein the empty containers (10) are supported on the sections (6) of larger diameter (d1).

5. Transport device according to any one of the preceding claims, **characterised in that** it is designed as an inclined conveyor (1), in particular with a working angle of 60° to 85°.

## Revendications

1. Procédé de reprise de récipients vides, notamment de bouteilles et de boîtes, avec une introduction en vrac, suite à laquelle les récipients vides (10) sont convoyés tout en tournant autour de leurs axes longitudinaux au moyen d'un dispositif de transport (1) depuis un espace d'introduction (8) en passant devant une unité de reconnaissance (14) et les récipients vides (10) sont amenés par le dispositif de transport (1) de façon parallélisée depuis l'espace d'introduction (8) à un champ de détection (15) de l'unité de reconnaissance (14) dans un réseau, le dispositif de transport (1) présentant plusieurs éléments entraîneurs espacés l'un de l'autre et disposés transversalement au sens de transport qui circulent autour d'une surface d'appui (7) du dispositif de transport (1) et sont conçus comme rouleaux (4) entraînés en rotation dans le sens inverse à celui des aiguilles d'une montre sur lesquels reposent des récipients vides (10) convoyés depuis l'espace d'introduction (8) qui s'appuient simultanément sur la surface d'appui (7), **caractérisé en ce qu'**une inversion brève du sens de rotation a lieu pour au moins un rouleau (4) qui se situe sur sa trajectoire de circulation autour de la surface d'appui dans une zone entre l'espace d'introduction (8) et le champ de détection (15).

2. Dispositif de transport servant à l'exécution du procédé suivant la revendication 1, **caractérisé en ce que** les rouleaux (4) sont logés rotatifs de part et d'autre sur des mécanismes d'entraînement à chaîne sans fin (2, 3) circulant autour de la surface d'appui (7) et font saillie de part et d'autre au-delà d'une zone d'entraînement (M) et s'appuient dans les zones en saillie (Ü) ainsi formées par ajustement à friction ou par complémentarité de formes sur des rails (16, 17) qui sont disposés du côté de la surface d'appui (7) par rapport aux mécanismes d'entraînement à chaîne sans fin (2, 3) et interrompus dans la zone entre l'espace d'introduction (8) et le champ de détection (15), dans lequel un inversement du sens de rotation de l'au moins un rouleau (4) doit avoir lieu, et **en ce que** dans cette zone d'autres rails (18) sont disposés au-dessus des rouleaux (4), rails (18), sur lesquels les rouleaux (4) s'appuient par ajustement à friction ou par complémentarité de formes pour l'entraînement en rotation.

3. Dispositif de transport suivant la revendication 2, **caractérisé en ce que** dans les zones en saillie (Ü), les rouleaux (4) présentent une partie (K), dont le diamètre (d2) est inférieur au diamètre (d1) des rouleaux (4) dans la zone d'entraînement (M), les rouleaux (4) s'appuyant dans la zone du champ de détection (15) avec les parties (K) pour l'entraînement en rotation, par ajustement à friction ou par complémentarité de formes, sur des rails (17) qui sont disposés du côté de la surface d'appui (7) par rapport aux mécanismes d'entraînement à chaîne sans fin (2, 3).

4. Dispositif de transport suivant la revendication 2, **caractérisé en ce que,** dans la zone d'entraînement (M), les rouleaux (4) sont constitués de parties (5, 6) à diamètres plus petits et plus grands alternantes, les récipients vides (10) reposant sur les parties (6) à diamètre plus grand (d1).

5. Dispositif de transport suivant une des revendications précédentes, **caractérisé en ce que** le dispositif de transport est conçu comme convoyeur incliné (1), notamment avec un angle d'inclinaison α de 60° à 85°.
